# EUROPEAN PATENT APPLICATION

(11) **EP 4 557 431 A1**
(43) Date of publication of application: **21.05.2025**
(21) Application number: 23886213.0
(22) Date of filing: 31.10.2023
(51) Int. Cl.: H01M 10/0562, C01B 25/14, H01M 10/052

(54) **SOLID ELECTROLYTE, METHOD FOR MANUFACTURING SAME, AND ALL-SOLID-STATE BATTERY COMPRISING SAME**

(30) Priority: 31.10.2022 KR 20220142618
(71) Applicant: LG Chem, Ltd., Yeongdeungpo-gu Seoul 07336 (KR); IUCF-HYU (Industry-University Cooperation Foundation Hanyang University), Seoul 04763 (KR)
(72) Inventor: LEE, Seong Ho, Daejeon 34122 (KR); SONG, Tae Seup, Seoul 03180 (KR); KIM, Jeong Heon, Seoul 01899 (KR); LEE, Seung Woo, Seoul 02622 (KR); PARK, Chang Hun, Daejeon 34122 (KR); MIN, Sang Hyuk, Daejeon 34122 (KR); SON, Byoung Kuk, Daejeon 34122 (KR)
(74) Representative: Plasseraud IP
(86) International application number: PCT/KR2023/017117
(87) International publication number: WO 2024/096517

(57) **Abstract**

The present invention relates to a sulfide-based solid electrolyte having excellent moisture stability and ionic conductivity, a method of preparing the same, and an all-solid-state battery including the sulfide-based solid electrolyte, wherein the present invention provides a solid electrolyte which includes a core portion including sulfide-based solid electrolyte particles; and a surface portion which is formed on the core portion and includes fluorine-doped sulfide-based solid electrolyte particles, wherein the surface portion includes a concentration gradient region in which a concentration of a fluorine (F) atom is decreased from a surface of the surface portion toward the core portion, a method of preparing the same, and an all-solid-state battery including the solid electrolyte.

## Description

### TECHNICAL FIELD

### Cross-reference to Related Applications

This application claims priority from Korean Patent Application No. 10-2022-0142618, filed on October 31, 2022, the disclosure of which is incorporated by reference herein.

### Technical Field

The present invention relates to a sulfide-based solid electrolyte having excellent moisture stability and ionic conductivity, a method of preparing the same, and an all-solid-state battery including the sulfide-based solid electrolyte.

### BACKGROUND ART

An all-solid-state battery is a battery which replaces a liquid electrolyte filling between a positive electrode and a negative electrode of a conventional lithium secondary battery with a solid, wherein, since it has higher energy density than the conventional battery while being safe as there is no risk of explosion, it is attracting attention as a next-generation battery. A solid electrolyte used in the all-solid-state battery is a material in a solid state which may conduct lithium ions in the battery, wherein it has high ionic conductivity comparable to that of an electrolyte solution currently used in the lithium secondary battery. Core materials constituting the solid electrolyte include a polymer, a sulfide, or an oxide, but, among them, a sulfide-based solid electrolyte with high ductility and ionic conductivity is evaluated as suitable for preparing a high-capacity large battery.

However, since the sulfide-based solid electrolyte is highly reactive to moisture, it has a problem in that it reacts with the moisture in the air to generate hydrogen sulfide, a harmful gas. Accordingly, there is a problem in that the toxic hydrogen sulfide not only adversely affects safety of workers, but also reduces ionic conductivity of the sulfide-based solid electrolyte itself.

In order to solve this problem of the sulfide-based solid electrolyte, a method of doping aluminum (Al) and nitrogen (N) in the conventional electrolyte or forming a polymer coating layer has been studied, but there is a problem in that an improvement in moisture stability is insignificant and the coating layer rather increases resistance.

Thus, there is a need to develop a sulfide-based solid electrolyte having excellent ionic conductivity due to low resistance as well as excellent moisture stability.

### [Prior Art Document]

(Patent Document) KR 2017-0050562 A

### DISCLOSURE OF THE INVENTION

### TECHNICAL PROBLEM

An aspect of the present invention provides a solid electrolyte with excellent moisture stability without adversely affecting resistance of a battery when included in the battery.

Also, another aspect of the present invention provides a method of preparing the solid electrolyte.

In addition, another aspect of the present invention provides an all-solid-state battery including the solid electrolyte.

### TECHNICAL SOLUTION

In order to solve the above-described tasks, the present invention provides a solid electrolyte; a method of preparing the same and an all-solid-state battery including the solid electrolyte.
(1) The present invention provides a solid electrolyte which includes a core portion including sulfide-based solid electrolyte particles; and a surface portion which is formed on the core portion and includes fluorine-doped sulfide-based solid electrolyte particles, wherein the surface portion includes a concentration gradient region in which a concentration of a fluorine (F) atom is decreased from a surface of the surface portion toward the core portion.
(2) The present invention provides the solid electrolyte of (1) above, wherein the fluorine-doped sulfide-based solid electrolyte particles are represented by Formula 1:

   [Formula 1] Li_{(12-x-b)}BS(_{6-x-a-b})XₐF_{b}Yₓ

   wherein, in Formula 1,
   B is phosphorus (P), arsenic (As), germanium (Ge), gallium (Ga), antimony (Sb), silicon (Si), tin (Sn), aluminum (Al), indium (In), titanium (Ti), vanadium (V), niobium (Nb), or tantalum (Ta),
   X is selenium (Se) or tellurium (Te),
   Y is chlorine (Cl), bromine (Br), iodine (I), CN, OCN, SCN, or N₃, and
   x satisfies 0≤x≤2, a satisfies 0≤a≤2, and b satisfies 0.1<b≤1.0.
(3) The present invention provides the solid electrolyte of (1) or (2) above, wherein the fluorine-doped sulfide-based solid electrolyte particles are represented by Formula 1-1:

   [Formula 1-1] Li₆PS₅Cl_{(1-b)}F_{b}

   wherein, in Formula 1-1,
   b satisfies 0.1<b≤1.0.
(4) The present invention provides the solid electrolyte of any one of (1) to (3) above, wherein the sulfide-based solid electrolyte particles are an argyrodite-type solid electrolyte.
(5) The present invention provides the solid electrolyte of any one of (1) to (4) above, wherein the sulfide-based solid electrolyte particles are represented by Formula 2:

   [Formula 2] Li₍₁₂₋ₓ₎BS₍₆₋ₓ₋ₐ₎XₐYₓ

   wherein, in Formula 2,
   B is P, As, Ge, Ga, Sb, Si, Sn, Al, In, Ti, V, Nb, or Ta,
   X is Se or Te,
   Y is Cl, Br, I, CN, OCN, SCN, or N₃, and
   x satisfies 0≤x≤2, and a satisfies 0≤a≤2.
(6) The present invention provides the solid electrolyte of any one of (1) to (5) above, wherein the concentration gradient region includes a region from a surface of the solid electrolyte to a distance of 30 nm or more to less than 1,200 nm toward the core portion.
(7) The present invention provides the solid electrolyte of any one of (1) to (6) above, wherein an average particle diameter is in a range of 2 µm to 10 µm.
(8) The present invention provides a method of preparing a solid electrolyte which includes a step of heat-treating sulfide-based solid electrolyte particles in the presence of ammonium fluoride in an inert gas atmosphere, wherein the ammonium fluoride is used in an amount of 1 part by weight to 10 parts by weight based on 100 parts by weight of the sulfide-based solid electrolyte particles.
(9) The present invention provides the method of (8) above, wherein the sulfide-based solid electrolyte particles are an argyrodite-type solid electrolyte.
(10) The present invention provides the method of (8) or (9) above, wherein the heat-treating is performed by sequentially performing a first heat treatment step and a second heat treatment step, wherein the first heat treatment step is performed at a temperature of 200°C to 300°C for 1 hour to 5 hours, and the second heat treatment step is performed at a temperature of 400°C to 600°C for 5 hours to 10 hours.
(11) The present invention provides an all-solid-state battery including a positive electrode; a negative electrode; and the solid electrolyte of any one of (1) to (7) above.

### ADVANTAGEOUS EFFECTS

Since a solid electrolyte according to the present invention includes a surface portion including sulfide-based solid electrolyte particles, in which hydrophobic fluorine is doped on surfaces of the sulfide-based solid electrolyte particles, and a concentration gradient region in which a concentration of a fluorine (F) atom is decreased from the surface of the solid electrolyte particle toward a center, moisture stability is not only excellent, but ionic conductivity may also be excellent due to low resistance.

### BRIEF DESCRIPTION OF THE DRAWINGS

The following drawings attached to the specification illustrate specific examples of the present invention by example, and serve to enable technical concepts of the present invention to be further understood together with detailed description of the invention given below, and therefore the present invention should not be interpreted only with matters in such drawings.

FIG. 1 is scanning electron microscope (SEM) image of a solid electrolyte prepared by Example 1.

FIG. 2 is scanning electron microscope-energy dispersive X-ray spectroscopy (SEM-EDS) images of the solid electrolyte prepared by Example 1, wherein (a) sulfur (S) elemental map, (b) phosphorus (P) elemental map, (c) chlorine (Cl) elemental map, and (d) fluorine (F) elemental map are shown.

Figure 3 is a graph of Time-of-Flight Secondary Ion Mass Spectrometry (TOF-SIMS) results of the solid electrolyte prepared by Example 1.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Definition of Terms

The terminology used herein is for the purpose of describing particular example embodiments only and is not intended to be limiting of the present invention. In the specification, the terms of a singular form may include plural forms unless referred to the contrary.

In this specification, the term "concentration gradient" generally means a gradual change in solute concentration, wherein the concentration gradient in a solid electrolyte of the present invention means a gradual change in concentration of an atomic component constituting the solid electrolyte.

The term "particle" in this specification means a fine-sized object, such as an elementary particle, an atom, a molecule, and a colloid, which constitutes the corresponding material.

In this specification, it will be further understood that the terms "include," "comprise," or "have" specify the presence of stated features, numbers, steps, elements, or combinations thereof, but do not preclude the presence or addition of one or more other features, numbers, steps, elements, or combinations thereof.

### Measurement Method

In this specification, an "average particle diameter (D₅₀)" is measured using a particle size analyzer (PSA), wherein it is a particle diameter corresponding to a cumulative volume of 50% which is calculated from particles having a small particle diameter in a particle size distribution that is measured by a laser diffraction method.

### Solid Electrolyte

The present invention provides a solid electrolyte having excellent ionic conductivity as well as excellent moisture stability by including a surface portion including fluorine-doped sulfide-based solid electrolyte particles and a concentration gradient region on surfaces of the sulfide-based solid electrolyte particles.

The solid electrolyte according to an embodiment of the present invention is characterized in that it includes a core portion including sulfide-based solid electrolyte particles; and a surface portion which is formed on the core portion and includes fluorine-doped sulfide-based solid electrolyte particles, wherein the surface portion includes a concentration gradient region in which a concentration of a fluorine (F) atom is decreased from a surface of the surface portion toward the core portion.

The sulfide-based solid electrolyte reacts with moisture in the air to generate hydrogen sulfide gas, and, accordingly, ionic conductivity is not only reduced, but toxicity of the hydrogen sulfide gas also adversely affects safety.

Thus, a method of doping aluminum (Al) and nitrogen (N) in the sulfide-based solid electrolyte or forming a polymer coating layer on a surface has been studied, but an improvement in moisture stability was insignificant. Also, since sulfide-based solid electrolyte particles have a hydrophobic surface, it may be difficult to form a polymer coating layer containing a styrene-butadiene-based copolymer or acrylonitrile-butadiene-based copolymer on the surface. Accordingly, a method of forming a hydrophilic oxide buffer layer has been considered to help to form the polymer coating layer, but there is a problem in that resistance is increased and the hydrophilic oxide buffer layer is easily destroyed during the formation of the polymer coating layer due to poor ductility.

As another example, a method of forming an oxide coating layer by oxidizing the surface of the sulfide-based solid electrolyte has been studied, wherein the moisture stability is improved, but there is a problem in that ionic conductivity is poor due to an increase in resistance caused by the oxide coating layer.

However, since the solid electrolyte of the present invention includes a surface portion having a concentration gradient region by forming fluorine-doped sulfide-based solid electrolyte particles, in which fluorine (F) is substituted for a sulfur (S) site of the sulfide-based solid electrolyte to a specific region on the surfaces of the sulfide-based solid electrolyte particles, by heat-treating the sulfide-based solid electrolyte particles with ammonium fluoride, which is adjusted to a specific amount, in a nitrogen atmosphere, the moisture stability and the ionic conductivity may be excellent by effectively preventing a reaction with moisture when the solid electrolyte is exposed to the air.

Specifically, the sulfide-based solid electrolyte particles may be a sulfide-based solid electrolyte containing lithium (Li), phosphorus (P), and S, and may be an argyrodite-type solid electrolyte in terms of high ionic conductivity and low reactivity with a lithium negative electrode.

More specifically, the sulfide-based solid electrolyte particles may be represented by Formula 2 below.

[Formula 2] Li₍₁₂₋ₓ₎BS₍₆₋ₓ₋ₐ₎XₐYₓ

In Formula 2,
B is phosphorus (P), arsenic (As), germanium (Ge), gallium (Ga), antimony (Sb), silicon (Si), tin (Sn), aluminum (Al), indium (In), titanium (Ti), vanadium (V), niobium (Nb), or tantalum (Ta),
X is selenium (Se) or tellurium (Te),
Y is chlorine (Cl), bromine (Br), iodine (I), CN, OCN, SCN, or N₃, and
x satisfies 0≤x≤2, and a satisfies 0≤a≤2.

As another example, with respect to the sulfide-based solid electrolyte particles in Formula 2, B may be P, As, or Ga, X may be Se, and Y may be Cl, Br, or I.

For example, the sulfide-based solid electrolyte particles may be represented by Formula 2-1, Formula 2-2, or Formula 2-3 below.

[Formula 2-1] Li₆PS₅Z

In Formula 2-1, Z may be Cl, Br, or I.

[Formula 2-2] Li₆BS₅₋ₐXₐY

In Formula 2-2,
B is P, As, or Sb, X is Se or Te, Y is Se, Br, I, CN, OCN, SCN, or N₃, and 0≤a≤2.

[Formula 2-3] Li₇BS₆₋ₐXₐ

In Formula 2-3,
B is P, As, or Sb, X is Se or Te, and 0≤a≤2.

The surface portion includes fluorine-doped sulfide-based solid electrolyte particles, and includes a concentration gradient region in which a concentration of a F atom is decreased from the surface of the surface portion toward the core portion.

Specifically, the surface portion is formed by heat-treating the sulfide-based solid electrolyte particles with ammonium fluoride in a nitrogen atmosphere to fluoride the sulfide-based solid electrolyte to a predetermined region of the surface of the particle, wherein, since sulfur (S) on the core portion including the sulfide-based solid electrolyte particles is substituted with fluorine (F) and an amount of the fluorine substituted is decreases from the surface to the inside of the core portion, the surface portion may have the concentration gradient region of the F atom while including the fluorine-doped sulfide-based solid electrolyte particles.

The fluorine-doped sulfide-based solid electrolyte particles of the surface portion are those in which the sulfide-based solid electrolyte particles are doped with fluorine, wherein the fluorine-doped sulfide-based solid electrolyte particles may be those in which a portion of the sulfur in the sulfide-based solid electrolyte particles is substituted with fluorine, and may specifically be represented by Formula 1 below.

[Formula 1] Li_{(12-x-b)}BS(_{6-x-a-b})XₐF_{b}Yₓ

In Formula 1,
B is P, As, Ge, Ga, Sb, Si, Sn, Al, In, Ti, V, Nb, or Ta,
X is Se or Te,
Y is Cl, Br, I, CN, OCN, SCN, or N₃, and
x satisfies 0≤x≤2, a satisfies 0≤a≤2, and b satisfies 0.1<b≤1.0.

More specifically, the fluorine-doped sulfide-based solid electrolyte particles may be represented by Formula 1-1 below.

[Formula 1-1] Li₆PS₅Cl_{(1-b)}F_{b}

In Formula 1-1,
b satisfies 0.1<b≤1.0.

Also, the concentration gradient region of the surface portion may include a region from the surface of the surface portion to a distance of 30 nm or more to less than 1,200 nm toward the core portion, and may specifically include a region to a distance ranging from 30 nm to 1,000 nm, 100 nm to 1,000 nm, or 200 nm to 800 nm. If the concentration gradient region is within the above range, the reaction with moisture may be effectively blocked when exposed to air, and thus, the moisture stability and ionic conductivity may be excellent. Furthermore, in terms of obtaining a balanced effect of the excellent ionic conductivity and the effective blocking of the reaction with moisture, it may be more desirable that the concentration gradient region is not outside the above range.

Also, the solid electrolyte according to the embodiment of the present invention may have an average particle diameter of 2 µm to 10 µm, or 2 µm to 5 µm, wherein, if the average particle diameter is less than 2 µm, an electrolyte interface may be excessively formed to increase the resistance, and, if the average particle diameter is greater than 10 µm, an excessive amount of pores may be formed to increase the resistance.

### Method of Preparing Solid Electrolyte

The present invention provides a method of preparing the above solid electrolyte.

The method of preparing a solid electrolyte according to an embodiment of the present invention is characterized in that it includes a step of heat-treating sulfide-based solid electrolyte particles in the presence of ammonium fluoride in a nitrogen atmosphere, wherein the ammonium fluoride is used in an amount of 1 part by weight to 10 parts by weight based on 100 parts by weight of the sulfide-based solid electrolyte.

The heat-treating is a step of forming a surface portion on a surface of the sulfide-based solid electrolyte particle, wherein it may be performed by preparing the sulfide-based solid electrolyte particles and performing a heat treatment on the sulfide-based solid electrolyte particles in the presence of ammonium fluoride in a nitrogen atmosphere.

In this case, the ammonium fluoride may be used in an amount of 1 part by weight to 10 parts by weight, specifically, 1 part by weight to 5 parts by weight or 1 part by weight to 3 parts by weight based on 100 parts by weight of the sulfide-based solid electrolyte particles, and, in this case, a surface portion having the above-described concentration gradient region may be formed.

Also, the heat treatment is performed by sequentially performing a first heat treatment step and a second heat treatment step, wherein the first heat treatment step may be performed at a temperature of 200°C to 300°C for 1 hour to 5 hours, and the second heat treatment step may be performed at a temperature of 400°C to 600°C for 5 hours to 10 hours.

In an embodiment of the present invention, the sulfide-based solid electrolyte may be prepared by a method commonly known in the art and used, or may be purchased and used, and, in a case in which it is prepared and used, for example, it may be prepared by dissolving lithium sulfide, other sulfide-based raw materials, and a halogen compound in a solvent to obtain a precursor solution, and drying and heat-treating the precursor solution, or may be prepared by mixing the lithium sulfide, other sulfide-based raw materials and halogen compound by milling them in a powder state and heat-treating the mixture.

In this case, the lithium sulfide may be lithium sulfide (Li₂S), and the other sulfide-based raw materials may be phosphorus sulfides, such as P₂S₃, P₂S₅, P₄S₃, P₄S₅, and P₄S₁₀, specifically, phosphorus pentasulfide (P₂S₅). Also, the sulfide-based raw material may further include a substitution element, and, in this case, the substitution element may be As, Ge, Ga, Sb, Si, Sn, Al, In, Ti, V, Nb, Ta, Se, and/or Te.

Furthermore, the halogen compound may be lithium bromide, lithium chloride, lithium iodide, and a combination thereof.

### All-Solid-State Battery

The present invention provides an all-solid-state battery including the above solid electrolyte.

Specifically, the all-solid-state battery includes a positive electrode including a positive electrode active material, a negative electrode including a negative electrode active material, and a solid electrolyte layer including the solid electrolyte according to the present invention which is disposed between the positive electrode and the negative electrode.

Since the all-solid-state battery according to the present invention has a small decrease in ionic conductivity due to moisture, initial efficiency, life characteristics, and output characteristics of the battery may be excellent.

In this case, the all-solid-state battery of the present invention may be prepared according to a typical method known in the art. For example, the all-solid-state battery of the present invention may be prepared by stacking and pressing such that the solid electrolyte layer exists between the positive electrode and the negative electrode.

### Positive Electrode

The positive electrode may be prepared by coating a positive electrode collector with a slurry for a positive electrode which includes a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode collector may be used in various shapes such as that of a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of Al, iron (Fe), V, chromium (Cr), Ti, Ta, magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}CO_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, etc.), or lithium nickel cobalt aluminum oxide (e.g., LiNi_{0.8}Co_{0.15}Al_{0.05}O₂, etc.), and, in consideration of a significant improvement effect due to the control of types and content ratios of components constituting the lithium composite metal oxide, the lithium composite metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of solid content excluding the solvent in the slurry for a positive electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

### Negative Electrode

The negative electrode, for example, may be prepared by coating a slurry for a negative electrode, which includes a negative electrode active material, a binder, a conductive agent, and a solvent, on a negative electrode collector, or a graphite electrode formed of carbon (C) or a metal itself may be used as the negative electrode.

For example, in a case in which the negative electrode is prepared by coating the slurry for a negative electrode on the negative electrode collector, the negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one negative electrode active material selected from the group consisting of natural graphite, artificial graphite, a carbonaceous material; lithium-containing titanium composite oxide (LTO), Si, SiOₓ, metals (Me) such as Sn, Li, zinc (Zn), Mg, cadmium (Cd), cerium (Ce), Ni, or Fe; alloys composed of the metals (Me); oxides (MeOₓ) of the metals (Me); and composites of the metals (Me) and carbon. A silicon-based negative electrode active material including silicon (Si), silicon oxide (SiOₓ), or a silicon alloy may specifically be used as the negative electrode active material. In this case, since a thin and stable SEI layer containing a siloxane bond is formed, the high-temperature stability and life characteristics of the battery may be further improved.

The negative electrode active material may be included in an amount of 60 wt% to 99 wt%, preferably 70 wt% to 99 wt%, and more preferably 80 wt% to 98 wt% based on a total weight of solid content excluding the solvent in the slurry for a negative electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the slurry for a negative electrode.

The conductive agent is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers;fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the slurry for a negative electrode.

The solvent may include a non-polar solvent such as toluene and xylene, and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### Solid Electrolyte Layer

The solid electrolyte layer may further include a binder in addition to the solid electrolyte according to the present invention.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on a total weight of the solid electrolyte layer.

The present invention provides a battery module including the all-solid-state battery as a unit cell and a battery pack including the battery module may be provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

### Example 1

Li₂S, P₂S₅, and LiCl were mixed with a ball mill at a molar ratio of 5:1:2, and heat-treated at 550°C for 10 hours to prepare a sulfide-based solid electrolyte (Li₆PS₅Cl) having an average particle diameter of 3 µm.

While flowing nitrogen gas, 1 g of Li₆PS₅Cl was heat-treated at 250°C for 3 hours in the presence of 10 mg of NH₄F and then heat-treated at 550°C for 10 hours to prepare a solid electrolyte which included a sulfide-based solid electrolyte core portion and a surface portion having a fluorine concentration gradient.

### Example 2

A solid electrolyte, which included a sulfide-based solid electrolyte core portion and a surface portion having a fluorine concentration gradient, was prepared in the same manner as in Example 1 except that, in Example 1, 1 g of Li₆PS₅Cl was heat-treated in the presence of 20 mg of NH₄F.

### Example 3

A solid electrolyte, which included a sulfide-based solid electrolyte core portion and a surface portion having a fluorine concentration gradient, was prepared in the same manner as in Example 1 except that, in Example 1, 1 g of Li₆PS₅Cl was heat-treated in the presence of 30 mg of NH₄F.

### Comparative Example 1

Li₂S, P₂S₅, and LiCl were mixed with a ball mill at a molar ratio of 5:1:2, and heat-treated at 550°C for 10 hours to prepare Li₆PS₅Cl as a sulfide-based solid electrolyte.

### Comparative Example 2

Li₂S, P₂S₅, and LiCl were mixed with a ball mill at a molar ratio of 5:1:2, and heat-treated at 550°C for 10 hours to prepare a sulfide-based solid electrolyte (Li₆PS₅Cl) having an average particle diameter of 3 µm.

While flowing nitrogen gas and oxygen gas at a volume ratio of 9:1, 1 g of Li₆PS₅Cl was heat-treated at 250°C for 3 hours to prepare a solid electrolyte having an oxide coating layer formed thereon.

### Comparative Example 3

A solid electrolyte, in which fluorine was present throughout particles, was prepared in the same manner as in Example 1 except that, in Example 1, 1 g of Li₆PS₅Cl was heat-treated in the presence of 1 g of NH₄F.

### Experimental Example 1

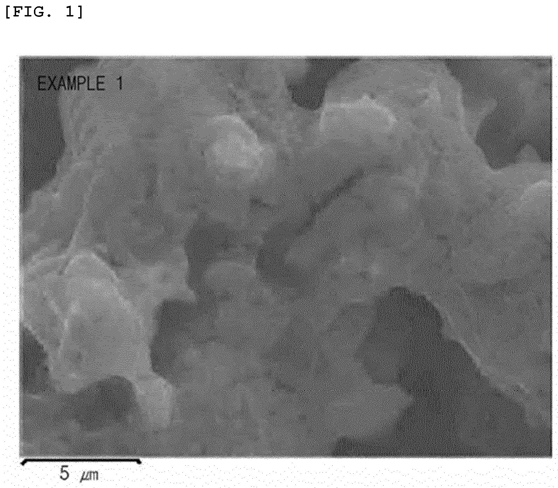

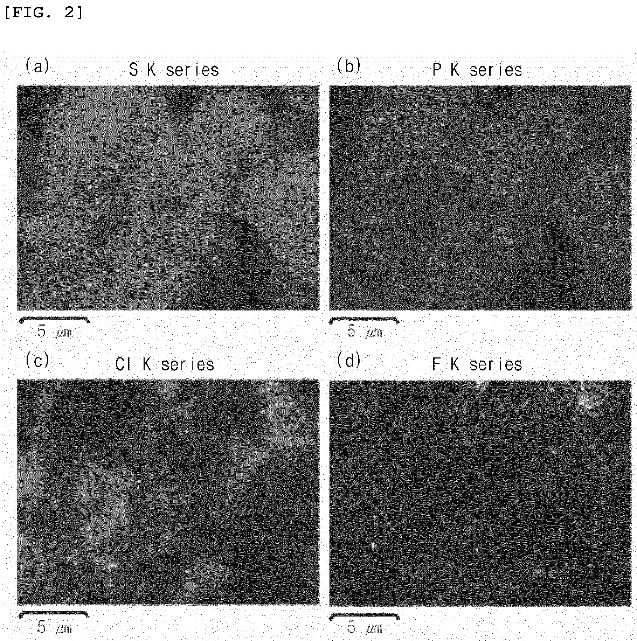

Surface components of the solid electrolyte prepared in Example 1 were analyzed by SEM and SEM-EDS mapping analysis and TOF-SIMS analysis, and the results thereof are presented in FIGS. 1 and 2.

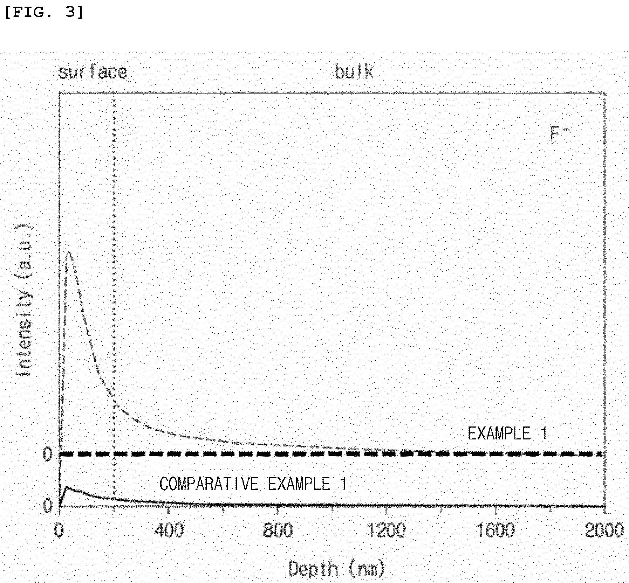

Also, a concentration gradient of fluorine element of the surface portion of the solid electrolyte prepared in Example 1 was analyzed, and the results thereof are presented in FIG. 3. The results of the concentration gradient analysis of the fluorine element of the surface portion were expressed in terms of relative intensity using Comparative Example 1 as a control group.

Components and concentration distribution were obtained by TOF-SIMS and SEM analysis.

The TOF-SIMS (Time of Flight-Secondary Ion Mass Spectroscopy) analysis was performed using a TOF-SIMS 5 (ION-TOF GmbH, Munster, Germany) instrument under the following conditions.
Primary Ion Beam: Bi₁
Primary Beam Voltage: 30 KeV
Primary Beam Current: 1.0 pA
Analysis Region: 150 µm × 150 µm (surface × depth)
Polarity: Negative mode
Sputter Beam: Cs⁺
Sputter Beam Voltage/Current: 2 KeV/ 134 nA
Sputter Area: 500 µm × 500 µm

The SEM and SEM-EDS analysis was performed using a JEOL-7800F instrument by setting an acceleration voltage to 15 kV. Sampling was conducted in a glove box filled with argon gas.

According to FIGS. 1 and 2, it may be confirmed that F was present on the surface of the solid electrolyte of Example 1, and, according to FIG. 3, the solid electrolyte of Example 1 had a concentration gradient region in which F was decreased from the surface toward the core portion.

### Experimental Example 2

Moisture stability and ionic conductivity of the solid electrolytes of the examples and the comparative examples were comparatively analyzed. The results thereof are presented in Table 1 below.

### (1) Moisture Stability

The moisture stability was confirmed by measuring an amount of hydrogen sulfide generated when the solid electrolyte was exposed to the air, wherein, after 100 mg of each solid electrolyte was put in an airtight container equipped with a thermohygrometer and a hydrogen sulfide gas concentration meter and exposed to the air at room temperature (23±5°C) and a relative humidity (RH) of 40% for 30 minutes, the amount of hydrogen sulfide generated (cm³/g, amount of hydrogen sulfide generated per 1 g of the electrolyte) was measured.

### (2) Ionic Conductivity

To confirm lithium ion conductivity of each solid electrolyte, alternating current impedance analysis was performed at room temperature.

0.15 g of each solid electrolyte was charged into a lithium ion conductivity measurement jig, and a pressure of several hundred MPa was applied to prepare a pellet. The lithium ion conductivity measurement jig containing the pellet-shaped solid electrolyte was placed in a constant temperature and humidity chamber and was then left standing at room temperature for 40 minutes. Thereafter, an alternating potential of 100 mV was applied, and a frequency sweep was performed from 1,000 Hz to 1 MHz to obtain impedance.

**[Table 1]**

| Category | Hydrogen sulfide generation amount (cm³/g) | Hydrogen sulfide generation rate relative to Comparative Example 1 (%) | Ionic conductivit y (mS/cm) | Ion conductivit y reduction rate relative to Comparative Example 1 (%) |
|---|---|---|---|---|
| Example 1 | 83 | 75.5 | 2.96 | 1.99 |
| Example 2 | 75 | 68.2 | 2.90 | 3.97 |
| Example 3 | 53 | 48.2 | 2.87 | 4.97 |
| Comparative Example 1 | 110 | 100.0 | 3.02 | 0.00 |
| Comparative | 92 | 83.6 | 2.75 | 8.94 |
| Example 2 | | | | |
| Comparative Example 3 | 27 | 24.5 | 2.46 | 18.54 |

As illustrated in Table 1, it was confirmed that the solid electrolytes of Examples 1 to 3 had a low ion conductivity reduction rate of less than 5% in comparison to Comparative Example 1 and had an effect of significantly reducing the amount of hydrogen sulfide generated to 50% to 83%. In contrast, with respect to the solid electrolyte of Comparative Example 2 having the oxide coating layer, a high reduction rate was exhibited in which the ionic conductivity reduction rate was two or more times while the effect of reducing the amount of hydrogen sulfide generated was significantly lower than those of Examples 1 to 3.

Also, with respect to the solid electrolyte of Comparative Example 3 in which fluorine was present up to the core portion, an amount of hydrogen sulfide generated was reduced in comparison to those of the examples, but, since an ionic conductivity reduction rate was about 4 to 9 times greater than those of the examples, it failed to demonstrate balanced excellence in moisture stability and ionic conductivity.

Through the above results, since the solid electrolyte according to the present invention included the surface portion including hydrophobic fluorine-doped sulfide-based solid electrolyte particles on the surface of the sulfide-based solid electrolyte particles and included the concentration gradient region in which the concentration of the F atom was decreased from the surface of the solid electrolyte particle toward the center, the generation of hydrogen sulfide when exposed to moisture was significantly suppressed while having excellent ionic conductivity corresponding to a sulfide-based solid electrolyte without any treatment on its surface, and thus, it was confirmed that it had an effect of excellent moisture stability.

## Claims

1. A solid electrolyte comprising:
a core portion including sulfide-based solid electrolyte particles; and
a surface portion which is formed on the core portion and includes fluorine-doped sulfide-based solid electrolyte particles,
wherein the surface portion comprises a concentration gradient region in which a concentration of a fluorine (F) atom is decreased from a surface of the surface portion toward the core portion.

2. The solid electrolyte of claim 1, wherein the fluorine-doped sulfide-based solid electrolyte particles are represented by Formula 1:
[Formula 1] Li_{(12-x-b)}BS(_{6-x-a-b})XₐF_{b}Yₓ
wherein, in Formula 1,
B is phosphorus (P), arsenic (As), germanium (Ge), gallium (Ga), antimony (Sb), silicon (Si), tin (Sn), aluminum (Al), indium (In), titanium (Ti), vanadium (V), niobium (Nb), or tantalum (Ta),
X is selenium (Se) or tellurium (Te),
Y is chlorine (Cl), bromine (Br), iodine (I), CN, OCN, SCN, or N₃, and
x satisfies 0≤x≤2, a satisfies 0≤a≤2, and b satisfies 0.1<b≤1.0.

3. The solid electrolyte of claim 1, wherein the fluorine-doped sulfide-based solid electrolyte particles are represented by Formula 1-1:
[Formula 1-1] Li₆PS₅Cl_{(1-b)}F_{b}
wherein, in Formula 1-1,
b satisfies 0.1<b≤1.0.

4. The solid electrolyte of claim 1, wherein the sulfide-based solid electrolyte particles are an argyrodite-type solid electrolyte.

5. The solid electrolyte of claim 1, wherein the sulfide-based solid electrolyte particles are represented by Formula 2:
[Formula 2] Li₍₁₂₋ₓ₎BS₍₆₋ₓ₋ₐ₎XₐYₓ
wherein, in Formula 2,
B is P, As, Ge, Ga, Sb, Si, Sn, Al, In, Ti, V, Nb, or Ta,
X is Se or Te,
Y is Cl, Br, I, CN, OCN, SCN, or N₃, and
x satisfies 0≤x≤2, and a satisfies 0≤a≤2.

6. The solid electrolyte of claim 1, wherein the concentration gradient region comprises a region from a surface of the solid electrolyte to a distance of 30 nm or more to less than 1,200 nm toward a center.

7. The solid electrolyte of claim 1, wherein an average particle diameter is in a range of 2 µm to 10 µm.

8. A method of preparing a solid electrolyte, the method comprising a step of heat-treating sulfide-based solid electrolyte particles in the presence of ammonium fluoride in an inert gas atmosphere,
wherein the ammonium fluoride is used in an amount of 1 part by weight to 10 parts by weight based on 100 parts by weight of the sulfide-based solid electrolyte particles.

9. The method of claim 8, wherein the sulfide-based solid electrolyte particles are an argyrodite-type solid electrolyte.

10. The method of claim 8, wherein the heat-treating is performed by sequentially performing a first heat treatment step and a second heat treatment step,
wherein the first heat treatment step is performed at a temperature of 200°C to 300°C for 1 hour to 5 hours, and
the second heat treatment step is performed at a temperature of 400°C to 600°C for 5 hours to 10 hours.

11. An all-solid-state battery comprising:
a positive electrode;
a negative electrode; and
the solid electrolyte of claim 1.
